# EUROPEAN PATENT APPLICATION

(11) **EP 2 028 795 A1**
(43) Date of publication of application: **25.02.2009**
(21) Application number: 07114927.2
(22) Date of filing: 24.08.2007
(51) Int. Cl.: H04L 12/28, H04L 12/56

(54) **Configuring a mesh network**

(71) Applicant: Hopling Group B.V., 1322 BC ALMERE (NL)
(72) Inventor: Muns, Willem Sebastiaan, 1271 NJ, Huizen (NL); Stam, Michel, 3453 TJ, De Meern (NL)
(74) Representative: van Looijengoed, Ferry Antoin Theodorus

(57) **Abstract**

The invention enables the configuration of a mesh network. A layer 2 management frame is used to detect mesh nodes and a network discovery protocol in a layer 2 frame is used to transmit discovery protocol information elements from a first communication device to a second communication device in the mesh network.

## Description

### Field of the invention

The invention relates to a method for configuring a mesh network, a first communication device that is arranged to transmit network discovery information to a second communication device, and a mesh network.

### Background of the invention

A growing popularity of wireless networking opens up a new market for service providers to offer Internet access to users. Mesh networking allows a service provider a way of extending the coverage area of a wireless network without the need of a wired distribution system. Products that offer mesh functionality often require manual configuration on the part of the service provider. This requires knowledge of Wi-Fi networking in general and specific knowledge about the products. This knowledge is not always available, which complicates the installation process.

It is known that networks can be configured using discovery protocols. Examples of such protocols are Cisco Discovery Protocol (CDP), Foundry networks FDP and IEEE 802.1AB.

Ethernet is a known protocol on layer 2 of the OSI model. The layer 2 Ethernet implementation known as "Ethernet IEEE 802.3 SNAP" defines a frame format that enables protocol extensions to the Ethernet standard. Hereto the Ethernet IEEE 802.3 SNAP frame includes an IEEE Organizationally Unique Identifier (OUI) followed by a 2-bytes Protocol ID, indicating the presence of a protocol extension.

### Summary of the invention

It is an object of the invention to provide a method for configuring a mesh network using a discovery protocol with enhanced functionality.
According to an aspect of the invention a method is provided for configuring a mesh network comprising at least two communication devices. The method comprises the steps of providing a layer 2 management frame comprising a mesh capabilities information element and transmitting the layer 2 management frame from a first communication device to a second communication device. The layer 2 management frame can conform to an existing frame format, like e.g. an IEEE 802.11 management frame, which advantageously enables the mesh capabilities information element to be transmitted to the second device without needing to know the capabilities of the second communication device. The mesh capabilities information element comprises one or more of the following information fields: a discovery protocol identification indicating a capability of the first communication device of handling a discovery protocol; a capability of the first communication device of automatically establishing a mesh connectivity; an encryption indicator indicating whether the first communication device encrypts a layer 2 discovery protocol information element; a mesh count indicating a maximum number of mesh connections that the first device is capable of establishing; a number of mesh links indicating the number of mesh connections that the first device has established; a mesh identification identifying a mesh network. This advantageously enables the second communication device to detect the capabilities of the first communication device with regard to setting up a mesh network using the discovery protocol.

The embodiment of the invention as defined in claim 2 advantageously enables discovery of information about the signal strength as perceived in the first communication device.

The embodiment of the invention as defined in claim 3 advantageously enables the second communication device to discover a third communication device that is connected to the first communication device.

The embodiment of the invention as defined in claim 4 advantageously enables discovery of information about the location of the first communication device.

The embodiment of the invention as defined in claim 5 advantageously enables discovery of information about the radio device on the first communication device.

The embodiment of the invention as defined in claim 6 advantageously enables discovery of information about the bandwidth usage at the first communication device.

The embodiment of the invention as defined in claim 7 advantageously enables the second communication device to discover a point of access at the first communication device when one or multiple virtual communication device(s) on the first communication device are used.

The embodiment of the invention as defined in claim 8 advantageously enables the transmission of the discovery information in a secure manner. Preferably a shared secret is used for encryption, but the invention is not limited to the use of a shared secret. It is possible to use e.g. public key cryptography or any other form of cryptography.

The embodiment of the invention as defined in claim 9 advantageously ensures that the communication devices in the mesh network receive advertisements from all other communication devices in the mesh network.

The embodiment of the invention as defined in claim 10 advantageously enables the mesh network to continue to function when the second communication device fails.

According to an aspect of the invention a first communication device is provided that is arranged to transmit a layer 2 management frame and/or network discovery information to a second communication device by using one or more of the steps of the method performed by the first communication device as described above.

According to an aspect of the invention a mesh network is provided that is configured using one or more of the steps of the method as described above.

The invention can advantageously be used in wireless mesh networks, but is not limited to use in such networks. The invention can be used in any network that is capable of transporting packets in accordance with the IEEE 802.2 Sub-network Access Protocol (SNAP), such as an Ethernet network or IEEE 802.16 Wi-MAX network, or more generally in any network capable of layer 2 protocol extensions.

The invention can advantageously be used for configuring a mesh network, but is not limited to configuring the mesh network. The invention can also be used for maintaining a configured mesh network.

Further advantageous embodiments and advantages of the invention are defined in the dependent claims and the following description.

The invention will be further illustrated with reference to the attached drawings, which schematically show preferred embodiments according to the invention. It will be understood that the invention is not in any way restricted to these specific and preferred embodiments.

### Brief description of the drawings

The invention will be explained in greater detail by reference to exemplary embodiments shown in the drawings, in which:
Fig.1 shows a simplified example of a network architecture;
Fig.2 shows the first four layers of the Open Systems Interconnection basic reference model (OSI model), as known in the prior-art;
Fig.3 shows the frame format of a layer 2 Ethernet implementation known in the prior art as "Ethernet IEEE 802.3 SNAP";
Fig.4 shows a discovery protocol frame of an exemplary embodiment of the invention;
Figs.5a-5c shows shuffling and grouping of discovery protocol information elements of an exemplary embodiment of the invention;
Fig.6 shows a mesh network of an exemplary embodiment of the invention.

### Detailed description of the drawings

The invention enables a secure exchange of information between devices to enable a device to configure itself for optimal communication with a neighbouring device. As an additional benefit, it allows mechanics and NOC (Network Operating Centre) technicians to get a view of the network from the perspective of the devices (which is not necessarily the network as its designer intended), as well as to obtain information about the availability or performance of a device.

The network protocol according to the invention is a socalled discovery protocol for exchanging network discovery information.

The discovery protocol is designed such that it fulfils requirements of efficiency, flexibility and security.

With regard to efficiency, the discovery protocol is designed to not overly affect the network it is providing information about. If the amount of overhead in the discovery protocol or the amount of information sent for management purposes takes up a significant amount of bandwidth it would invalidate its purpose. Secondly, the discovery protocol is light-weight. A complex protocol would consume system resources, which are better used for the devices' primary purpose.

With regard to flexibility, the discovery protocol is designed to be future-proof. In other words, it is possible to extend the discovery protocol beyond its initial design, adding information to it which was not included in the original specification. Secondly, to enable servers to support wireless access gateways, the discovery protocol can be used on both wired and wireless networks. IP connectivity is not always available on a device; therefore the discovery protocol is not dependent on the IP protocol.

Especially with multiple wireless networks coexisting, care must be taken that information from one wireless network does not reach another wireless network. With regard to security, due to the sensitive nature of some of the data in the information exchanged by the discovery protocol, the discovery protocol according to the invention prevents unauthorized access to the data.

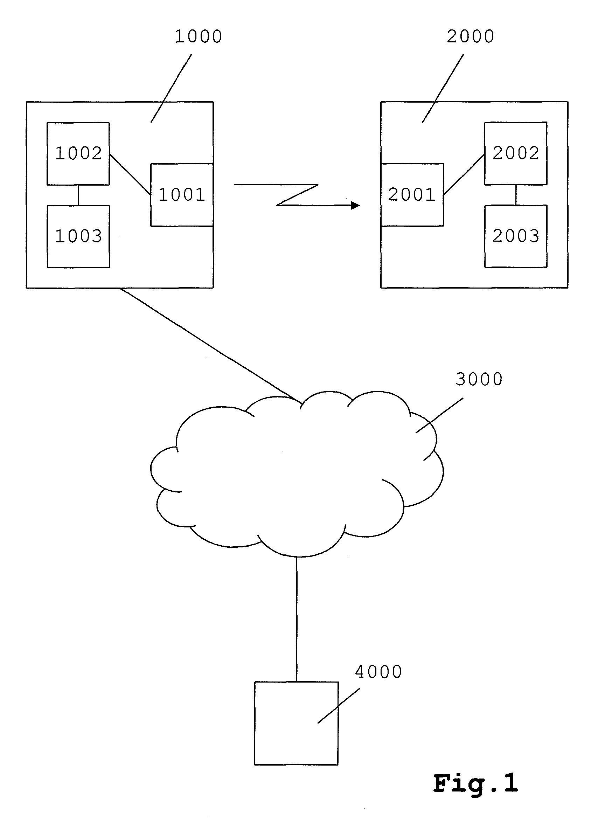

Fig.1 shows a simplified example of a wireless network that is connected to a fixed network. In Fig.1 a first communication device 1000 is wirelessly connected to a second communication device 2000. The first communication device and second communication device are e.g. wireless routers, base stations or gateways. Together, the first communication device 1000 and the second communication device 2000 form a wireless network. The first communication device comprises a transmitter 1001 and a memory 1003, which are connected to a processor 1002. Using the memory 1003 and processor 1002 the first communication device 1000 is capable of processing information and transmitting the information using the transmitter 1001. The second communication device comprises a receiver 2001 and a memory 2003, which are connected to a processor 2002. Using the memory 2003 and processor 2002 the second communication device 2000 is capable of receiving information using the receiver 2001 and processing the information. The first communication device 1000 has a connection to a fixed network 3000 through a fixed link. A computer 4000 at a NOC (Network Operating Centre) can communicate with the first communication device 1000 via the Internet 3000.

It will be understood that instead of wireless communication devices fixed-line communication devices can be used. The communication devices then form a fixed-line network instead of a wireless network. Hybrid networks comprising both wireless and fixed-line communication devices are also possible.

### Transport mechanism

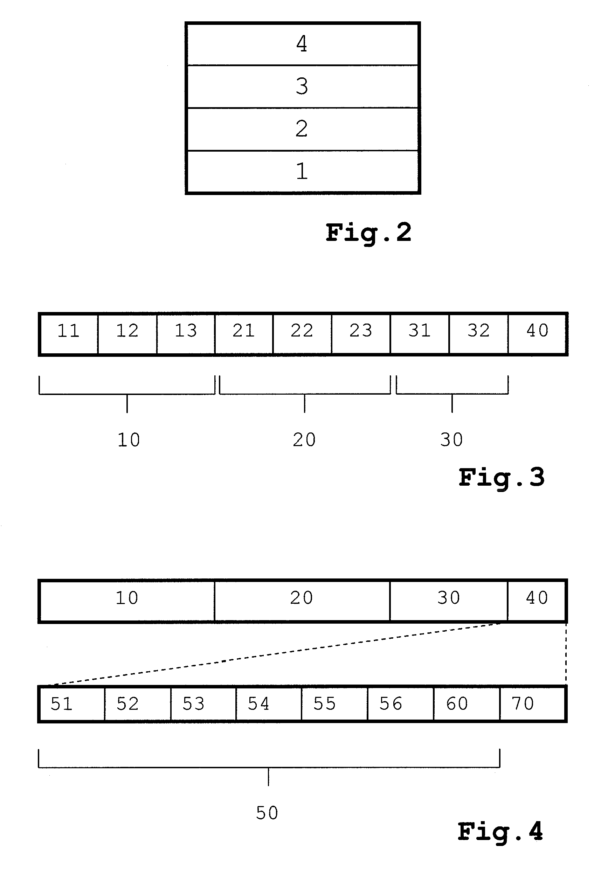

In Fig.2 the Open Systems Interconnection basic reference model (OSI model), as known in the prior-art, is shown for layers 1-4.

The transport layer 4 provides transparent transfer of data between end users, providing reliable data transfer services to the upper layers. The transport layer 4 controls the reliability of a given link through flow control, (de)segmentation, and error control. The Transmission Control Protocol (TCP) and User Datagram Protocol (UDP) are examples of transport layer protocols.

The network layer 3 provides the functional and procedural means of transferring variable length data sequences from a source to a destination via one or more networks while maintaining the quality of service requested by the transport layer 4. The network layer 3 performs network routing functions, and might also perform fragmentation and reassembly, and report delivery errors. The best known example of a layer 3 protocol is the Internet Protocol (IP).

The data link layer 2 provides the functional and procedural means to transfer data between network entities and to detect and possibly correct errors that may occur in the physical layer 1. This layer manages the interaction of devices with a shared medium. It arranges bits from the physical layer into logical chunks of data, known as frames. At layer 2 bridges and switches operate. Connectivity is provided only among locally attached network nodes forming layer 2 domains for unicast or broadcast forwarding. Other protocols may be imposed on the data frames to create tunnels and logically separated layer 2 forwarding domain. Ethernet (IEEE 802.3) is a known example of a layer 2 protocol.

The physical layer 1 defines the electrical and physical specifications for devices. In particular, it defines the relationship between a device and a physical medium. This includes the layout of pins, voltages, and cable specifications. Hubs, repeaters and network adapters are examples of physical-layer devices.

The layer 2 Ethernet implementation known as "Ethernet IEEE 802.3 SNAP" defines a frame format as shown in Fig.3. The Ethernet IEEE 802.3 SNAP frame comprises of an IEEE 802.3 Data Link header 10, an IEEE 802.2 Logical Link Control (LLC) header 20, an IEEE 802.2 Sub-network Access Protocol (SNAP) header 30 and payload data 40.

The Data Link header 10 comprises of a 6-bytes destination address 11, a 6-bytes source address 12 and a 2-bytes packet length 13 indicating the length of the Ethernet frame following the packet length 13.

The LLC header 20 comprises a 1-byte Destination Service Access Point (DSAP) 21, a 1-byte Source Service Access Point (SSAP) 22 and a 1-byte control field 23. Because the SNAP header follows the LLC header, DSAP has a fixed value of 0xAA (i.e. the value AA in hexadecimal formal), SSAP has a fixed value of 0xAA and the control field has a fixed value of 0x03.

The SNAP header 30 comprises of a 3-bytes IEEE Organizationally Unique Identifier (OUI) 31 followed by a 2-bytes Protocol ID 32.

The payload data 40 has a maximum length of 1492 bytes.

The discovery protocol is a light-weight protocol without dependency on IP connectivity. It uses the next-lower layer below IP in the OSI model, i.e. the discovery protocol is a layer 2 protocol based on Ethernet IEEE 802.3 SNAP. A benefit of this is that the discovery protocol bypasses any OSI layer 3 firewall.

To prevent conflicts between Ethernet packets using the discovery protocol and other Ethernet packets, the SNAP header 30 is used. The OUI part 31 of the SNAP header 30 can be registered with IEEE. The OUI for Hopling Technologies is e.g. registered with IEEE as 0x0019AE. The protocol identifier part 32 of the SNAP header 30 can be set to a predefined value, e.g. 0x0001.

Several options exist to transfer Ethernet packet using the discovery protocol to recipients: via unicast, broadcast and/or multicast. From the perspective of the sending device 1000, multicast and broadcast are far less time-consuming than using unicast Ethernet packets (addressing every potential station individually). For management applications, it is possible to address one device 2000 instead of being required to address all devices (for instance to get network device maps); hereto unicast can be used. By using multicast as well, it is ensured that the information is sent only to devices that wish to receive discovery protocol data, as opposed to broadcast, where the information is sent to all devices. The same OUI 31 which is used to differentiate from other packet types also provides a range of destination multicast addresses, one of which all discovery protocol supporting devices can subscribe to.

By not acknowledging traffic sent, the sender 1000 is spared the burden of having to process a potential packet-storm every time the Ethernet packet with discovery protocol information is sent. Consequently delivery of packets is not guaranteed. To ensure delivery, the packet is periodically re-sent. This works especially well given the fact that receiving devices 2000 might not be available at the time a packet is sent.

Changes to the network can be contained in the packet if the packet is not retained in the receiving device 2000 indefinitely. To this end, two extra timers are attached to every received packet. One timer defines the time after which a node 1000 is to be considered down temporarily, and another timer defines the time after which a node 1000 is to be considered down permanently. The first timer is set to a multiple of the period with which packets are received. The second timer is even larger, i.e. a multiple of the first timer is preferable.

To prevent issues with various hardware platforms in a network with a different endianness at the CPU level, data is sent in network byte order (i.e. most significant byte first).

### Encryption

To prevent unauthorized access, data is encrypted. While this would be possible using (for instance) public key cryptography, this is far too complex for the discovery protocol to remain light-weight. Therefore a shared secret is used between the participating devices 1000,2000 to ensure that the data is not immediately accessible. An additional benefit of using a shared secret key is that multiple networks co-existing can only receive each others' discovery protocol data if the encryption keys are identical. Decryption failures are either silently ignored, or preferably, a notification is sent to the system, for instance using the syslog protocol of RFC 3164.

To verify whether a discovery protocol packet has been decrypted correctly, the data packet contains a CRC-32 checksum 60. After decryption, verifying the checksum 60 ensures that the packet has been decrypted correctly. The checksum 60 is placed within the encrypted part of the data packet to prevent giving away information which can be used to crack the encryption key.

Because a static key is used, static discovery protocol data such as packet version information is not included in the encrypted part of the packet.

Preferably a strong encryption cipher such as AES is used. The cipher can impose minimum and maximum lengths on the encryption key, which may require padding or clipping.

### Discovery protocol frame format

Network discovery information sent using the discovery protocol is encoded in a variable manner. This is done by using Type-Length-Value Information Elements (TLV IEs) and concatenating these elements to form the payload part of the discovery protocol packet. This allows flexibility; future additions to the discovery protocol do not require a redesign of the protocol itself. A TLV IE used in the discovery protocol is called discovery protocol information element 70.

Fig. 4 shows a discovery protocol frame. The discovery protocol frame has a discovery protocol header part 50 and a payload part. The payload part comprises of discovery protocol information elements 70.

The discovery protocol header 50 defines the information transferred and contains one or more of the following fields: version 51, period 52, fragmentation 53, sequence 54, subject 55, network 56 and checksum 60. The order of the fields can be arbitrary.

The version field 51 indicates the version of the discovery protocol and is set to 0x0001 in case of version 1.

The period field 52 contains the packet transmission interval in seconds.

Packets can be fragmented when there are more discovery protocol information elements than can be fit in a single Ethernet frame of 1536 bytes. Fragmentation may only occur on boundaries of discovery protocol information elements 70, i.e. no partial discovery protocol information elements may be left in the packet. When fragmentation occurs, the most significant 4 bits of the fragmentation field 53 contain the number of fragments in the entire data frame. The least significant 4 bits of the fragmentation field 53 contain a counter running from 0 and incremented by 1 for every fragment sent. The receiving end 2000 is responsible for reassembly and may drop the entire frame if a fragment is not received within the amount specified in the period field 52. If fragmentation is not used, the entire fragmentation field 53 can be set to 0x00. If more data is received than can fit into 16 fragments, any remaining data may be dropped.

The sequence field 54 contains a unique number identifying one frame.

The subject field 55 contains an identifier for the data contained in the frame. Examples of values for the subject field are 0000 for general information, 0001 for system information, 0002 for mesh information and 0003 for management nodes. The subject field 55 can be used to give a general indication to the recipient 2000 of the type of discovery protocol information elements 70 that are contained in the data packet. This may be used by recipient 2000 to discard data before decryption if it is deemed not interesting, or on embedded platform to only implement a subset of the full discovery protocol.

The network field 56 contains an integer number identifying the logical network the host 1000 belongs to. The Network field 56 can be used to logically split up one layer 2 network into several layer 2 networks. Discovery protocol packets for which the network field value does not match its own network can be ignored by the receiver 2000.

The checksum 60 is a bitwise little-endian IEEE 802.3 CRC-32 checksum over all discovery protocol information elements 70 in this fragment. Of all fields, only the checksum 60 and the discovery protocol information elements 70 are encrypted. This hides any data which can be used in a cracking attempt, and also returns one field which can be used after decryption to check whether the decryption key used was correct. Encryption can be performed using e.g. an AES-256 cipher.

Security is less strong when concatenating the various discovery protocol information elements 70 in the same order every time a packet is sent across the network. After encrypting, this provides a form of repetition in the data stream which could theoretically be used to crack the encryption. Therefore security is increased by concatenating the discovery protocol information elements 70 in a random order (shuffling) before encryption is applied. Furthermore the discovery protocol information elements 70 are grouped such that the amount of Ethernet frames needed to transmit all discovery protocol information elements 70 is minimized.

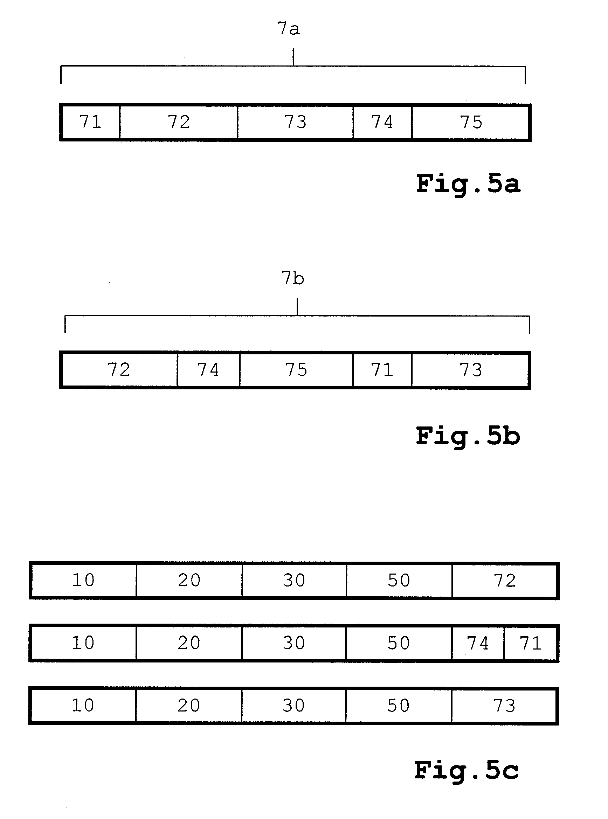

In Figs.5a-5c an example of shuffling and grouping is shown. In Fig.5a a set 7a of discovery protocol information elements 71-75 is provided. In Fig.5b the discovery protocol information elements 71-75 are shuffled and form a shuffled set 7b of discovery protocol information elements. Next, the discovery protocol information elements 71-75 are provided to Ethernet frames in the order of presence in the shuffled set 7b, as shown in Fig.5c. A first Ethernet frame is provided with discovery protocol information element 72. The first Ethernet frame further comprises a Data Link header 10, a LLC header 20, a SNAP header 30 and a discovery protocol header 50. A second Ethernet frame is provided with discovery protocol information elements 74 and 71. The discovery protocol information elements 74 and 71 are grouped together because they fit within a single Ethernet frame. The second Ethernet frame further comprises a Data Link header 10, a LLC header 20, a SNAP header 30 and a discovery protocol header 50. A third Ethernet frame is provided with discovery protocol information element 73. The third Ethernet frame further comprises a Data Link header 10, a LLC header 20, a SNAP header 30 and a discovery protocol header 50.

It is evident that it is possible to perform shuffling without grouping.

The discovery protocol information elements 70 contain 4 fixed fields, and a free-form data field. The first field is the Organization field (a 32-bit integer dword), uniquely identifying the company defining the information element. The numbers used are according to the IANA SMI Network Management Private Enterprise Codes. The value 0, which is designated by IANA as being 'Reserved' is used to indicate a General organization. The second field is the Entity field (a 16-bit word), a system-arbitrary integer which can be used to group discovery protocol information elements 70 belonging to a single logical host. The third field is the Type field (a 16-bit word), describing the type of information contained in the information element. The fourth field is the Length field (a 16-bit word), which specifies the number of bytes in the data portion of the discovery protocol information element 70 (in other words the entire information element except the Organization, Type, Length and Entity fields).

Frames which are too small to reach the minimum Ethernet frame size of 64 bytes use a 'padding' information element to make sure that the frame conforms to the Ethernet specification. The padding information element is also used for encryption algorithms to receive an aligned block of input data which is then subsequently encrypted using a block cipher (for instance, CBC). The padding information element contains the fields Organization = 0x00000000, Entity Type = 0x0000, Length = size (Pad) and Pad. The Length field comprises the size of the Pad field in bytes. The Pad field itself comprises random data, so as to prevent recurring data in the encrypted data stream (which could then be used to crack the encryption key) and improve the encryption strength of the encrypted data stream.

The 'last seen' information element contains the fields Organization = 0x00000000, Entity Type = 0x0001, Length = 0x0004 and Timestamp (32-bit dword). The Last seen IE contains a time stamp in seconds since the information contained in the entire discovery protocol data packet for this entity 1000 was last updated.

The 'device name' information element contains the fields Organization = 0x00000000, Entity Type = 0x0002, Length = size (Name) and Name. The Device name information element contains an ASCII C-style string with the host name of the device 1000 sending the information. The Length field comprises the length of the ASCII string, including the terminating 0x00.

The 'address' information element contains the fields Organization = 0x00000000, Entity Type = 0x0003, Length = 0x0003 + size (Address), Group (1 byte), Mask length (1 byte), Protocol (1 byte) and Address (varies). This information element contains the address at which a device 1000 can be reached for management (and related) traffic. The information element comprises of four fields; the Group field, the Mask length field, the Protocol field and the Address field. The Group field indicates the nature of the Address field. The Mask length field indicates the mask hexadecimal mask that is applied to the Address field to obtain a network address using a bit-wise AND, or to obtain the broadcast address using a bit-wise OR. The mask to apply to the address is calculated as: 2^(Mask Length - 1). The Protocol field indicates the protocol family the address belongs to, and an Address field, which contains the address itself. The size in bytes of the address depends on the protocol family in question.

The 'software release' information element contains the fields Organization = 0x00000000, Entity Type = 0x0005, Length = size (Release) and Release. The software release information element contains an ASCII C-style string with the human readable software release (including the software flavour) of the currently running software. The Length field comprises the length of the ASCII string, including the terminating 0x00.

The 'device information' information element contains the fields Organization = 0x00000000, Entity Type = 0x0006, Length = 0x0007, Uptime (32-bit dword), Load (16-bit word), Memusage (8-bit word). This information element contains three fields describing the operational status of a system. The first field contains the time the device 1000 has been operational in seconds. The second field contains the system load multiplied by 100. The third field contains the percentage of unused memory relative to the total amount of memory available on the device 1000. The Length field comprises the uptime (4 bytes), load (2 bytes) and memusage (1 byte).

The 'serial number' information element contains the fields Organization = 0x00000000, Entity Type = 0x0007, Length = size (Serial) and Serial. The Serial number information element contains an ASCII C-style string with the serial number of the device 1000 sending the information. The Length field comprises the length of the ASCII string, including the terminating 0x00.

The 'interface identification' information element contains the fields Organization = 0x00000000, Entity Type = 0x0008, Length = size (Interface) and Interface. The Interface ID information element contains an ASCII C-style string with the human readable interface name of the device 1000 sending the information. The Length field comprises the length of the ASCII string, including the terminating 0x00.

The 'first seen' information element contains the fields Organization = 0x00000000, Entity Type = 0x0009, Length = 0x0004 and Timestamp (32-bit dword). This information element contains a time stamp in seconds since discovery protocol information for this entity 1000 was first received.

The 'Receiving Interface ID' information element contains the fields Organization = 0x00000000, Entity Type = 0x000A, Length = size (Interface) and Interface. This information element contains an ASCII C-style string with the human readable interface name of the device which received the information. The Length field comprises the length of the ASCII string, including the terminating 0x00.

The 'event URI' information element contains the fields Organization = 0x0000699A, Entity Type = 0x0001, Length = size (URI) and URI. The Event URI information element contains an ASCII C-style string with the URI to which devices can send events. The Length field comprises the length of the ASCII string, including the terminating 0x00.

The 'signal strength' information element contains the fields Organization = 0x0000699A, Entity Type = 0x0002, Length = 0x002C, Frequency (32 bits), Address (48 bits), SNR (8 bits), Connected (1 bit), discovery protocol (1 bit), HAM (1 bit), HEM (1 bit), Radio (4 bits) and SSID (256 bits). This information element contains nine fields. The first is the channel frequency in MHz on which the mesh node 2000 has been seen by the sender 1000. The second field is the 48-bit IEEE 802.3 Ethernet address of the mesh node 2000 seen by the sender 1000. The third field is an indicator, containing the SNR the sender 1000 has observed from the mesh node 2000. The SNR is measured in dB above the noise floor, as specified by the IEEE 802.11 specification. The fourth field is a flag, which indicates whether the sender 1000 has established a logical link with the mesh node 2000. The fifth field indicates whether the node 2000 is capable of responding to discovery protocol packets. The sixth field (HAM) indicates whether the node 2000 is capable of automatically establishing a mesh. The seventh field (HEM) indicates whether the node 2000 is capable of setting up an Encrypted Mesh link (HEM). The eighth field indicates the radio device on which the node 2000 was seen. This is an integer number which arbitrarily indicates a unique interface on a node. The value 0xF indicates that the radio device is unknown. The ninth field contains the SSID ("Service Set Identifier") at which the node 2000 was seen sending IEEE 802.11 beacons. The Length field comprises the Frequency (32 bits), Address (6 bytes), SNR (1 byte), Connected (1 bit), discovery protocol (1 bit), HAM (1 bit), HEM (1 bit), Radio (4 bits) and SSID (32 bytes) fields. This information element describes the signal strength for a different mesh node 2000. If a device 1000 detects the same potential mesh node candidate on multiple radios, it reports the strongest possible radio link. When determining the SNR, implementations are suggested to read the value from the network driver, send a significant amount of data traffic to the Address the SNR is determined for, then read the value from the network driver again. This will give a more accurate value.

The 'associated stations' information element contains the fields Organization = 0x0000699A, Entity Type = 0x0003, Length = 0x0009, Address (48 bits), SNR (8 bits), Radio (4 bits), Virtual Gateway (4 bits), Mode (4 bits) and Flags (4 bits). This information element describes the wireless stations (clients) associated to the node 1000 and contains six fields. The first field is the 48-bit IEEE 802.3 Ethernet address of the associated station. The second field contains the SNR in dB from the perspective of the node 1000. The third field contains a 0-based value with the radio device on the node 1000 the station is associated to. This value is determined on a per-node basis. The value 0xF indicates that the radio device is unknown. The fourth field contains the Virtual Gateway number. This describes a virtual access point on a radio. The number is 0-based and determined on a per-node basis. The value 0xF indicates that the virtual gateway is unknown. The fifth field contains the authentication mode. The sixth field contains flags. The Length field comprises the Address (6 bytes), SNR (1 byte), Radio (4 bits), Virtual Gateway (4 bits), Mode (4 bits) and Flags (4 bits) fields.

The 'location' information element contains the fields Organization = 0x0000699A, Entity Type = 0x0004, Length = 0x0008, Longitude degrees (1 byte), Longitude minutes (6 bits), Longitude seconds (6 bits), Latitude seconds (6 bits), Latitude minutes (6 bits), Latitude degrees (1 byte), Longitude direction (1 bit), Latitude direction (1 bit), Height valid (1 bit), Flags (5 bits) and Height (2 bytes). This information element contains eleven fields to identify the geographic location of a device 1000. The first, second and third fields contain the degrees, minutes and seconds longitude, respectively. The value 0xFF for degrees and 0x3F for minutes or seconds indicate that the parameter is unknown. The fourth, fifth and sixth fields contain the seconds, minutes and degrees latitude, respectively. The value 0xFF for degrees and 0x3F for minutes or seconds indicate that the parameter is unknown. The seventh field is non-zero if the location lies in the eastern hemisphere (or 0 if it is located in the western hemisphere). The eighth field is non-zero if the location lies in the northern hemisphere (and 0 if the location lies in the southern hemisphere). The tenth field is a flag field. The eleventh field marks the height in meters above sea level, as a signed integer value. The tenth field indicates whether the height value has any meaning. The Length field comprises the Longitude degrees (1 byte), Longitude minutes (6 bits), Longitude seconds (6 bits), Latitude seconds (6 bits), Latitude minutes (6 bits), Latitude degrees (1 byte), Longitude direction (1 bit), Latitude direction (1 bit), Height valid (1 bit), Flags (5 bits) and Height (2 bytes) fields.

The 'device type' information element contains the fields Organization = 0x0000699A, Entity Type = 0x0005, Length = 0x0005, Hardware (2 bytes), Software (2 bytes) and Revision (1 byte). This information element contains three fields. The first is the Hardware field which contains an integer number specifying the type of device 1000 sending the data. The second field is the Software field which contains an integer number specifying the software running on the device 1000. The third field contains the Revision field, which can be used to designate a particular hardware revision of a device 1000. This revision field should not be confused with the software release, which is part of another information element. The Length field comprises the Hardware (2 bytes), Software (2 bytes) and Revision (1 byte) fields.

The 'wireless' information element contains the fields Organization = 0x0000699A, Entity Type = 0x0006, Length = 0x0014, Address (48 bits), Frequency (32 bits), Transmit Power (10 bits), Radio (4 bits), Elevation (9 bits), Azimuth (9 bits), PHY rate (16 bits), Antenna (16 bits) and Noise (16 bits). This information element contains nine fields which describe a radio device of the device 1000. The first field contains the 48-bit IEEE 802.3 Ethernet address of the radio device. The second field contains the frequency in MHz at which the radio operates. A value of 0 indicates an unknown frequency. The third field contains the radio's transmission power in units of 0.1 dBm. Note that this is excluding cable and antenna gain/loss. A value of 0 indicates an unknown transmission power. The fourth field is an integer number which arbitrarily indicates the radio device uniquely on the device. The value 0xF indicates that the radio device is unknown. The fifth field contains the inclination angle of the antenna's emission point in degrees above the horizon. This would be 90 degrees on most outdoor setups using an omni-directional antenna, for example. A value of 0x0FF indicates an unknown elevation. The sixth field contains the deviation of the antennas emission point in degrees from the compass North. A value of 0x0FF indicates an unknown azimuth. The seventh field contains the maximum data rate the radio is capable of achieving in units of 0.1 Mbps. A value of 0 indicates an unknown transmission rate. The eighth field contains the antenna connected to the radio device. The ninth field contains a signed 16-bit value with the radio noise floor in dB. A value of 0x7FFF indicates an unknown noise floor. The Length field comprises the Address (6 bytes), Frequency (4 bytes), Transmit Power (10 bits), Radio (4 bits), Elevation (9 bits), Azimuth (9 bits), PHY Rate (2 bytes), Antenna (2 bytes) and Noise (2 bytes) fields.

The 'virtual gateway' information element contains the fields Organization = 0x0000699A, Entity Type = 0x0007, Length = 0x0022, Radio (4 bits), Virtual Gateway (4 bits), Authentication Mode (4 bits), SSID Hidden (1 bit), Clients Allowed (1 bit) and SSID (256 bits). The virtual gateway information element is used to define one or multiple virtual communication device(s) on the first communication device 1000. Each virtual communication device can be configured separately. This information element contains seven fields which describe a point of access on a radio. The first field is an integer number which arbitrarily indicates the radio device uniquely on the first communication device 1000. The value 0xF indicates that the radio device is unknown. The second field contains the Virtual Gateway number. This describes a virtual access point on a radio device. The number is 0-based and determined on a per-node basis. The value 0xF indicates that the virtual gateway is unknown. The Third field contains the authentication mode. The fifth field is a flag which indicates whether the SSID contained within this information element is hidden from clients 2000 (in other words, not transmitted in the IEEE 802.11 Beacon). The sixth field is a flag which indicates whether clients 2000 are allowed to associate with this gateway 1000. The seventh field contains the IEEE 802.11 SSID which the node is configured to respond to. The Length field comprises the Radio (4 bits), Virtual Gateway (4 bits), Authentication Mode (4 bits), SSID Hidden (1 bit), Clients Allowed (1 bit) and SSID (256 bits) fields.

The 'bandwidth' information element contains the fields Organization = 0x00000000, Entity Type = 0x000B, Length = 0x001A, Local (48 bits), Peer (48 bits), Up Bytes Mantissa (16-bit word), Down Bytes Mantissa (16-bit word), Up Packets Mantissa (16-bit word), Down Packets Mantissa (16-bit word), Up Bytes Exponent (8-bit word), Down Bytes Exponent (8-bit word), Up Packets Exponent (8-bit word), Down Packets Exponent (8-bit word), Subinterface (12 bits), Subinterface Valid (1 bit), Standby (1 bit) and Up (1 bit). The Bandwidth IE contains 15 fields. The first field contains the 48-bit IEEE 802.3 Ethernet address on the local end of a mesh link. The second field contains the 48-bit IEEE 802.3 Ethernet address of the remote end of the mesh link. This value may be set to 00:00:00:00:00:00 to indicate that this IE describes a point-to-multipoint link. The third to sixth fields as well as the seventh to tenth fields are encoded values for the amount of traffic generated over the last packet transmission interval. The values are calculated as Mantissa * 10^Exponent. Exponent can be a negative value. The exponent value of -127 is reserved and indicates that the value is invalid. The values are:

| Mantissa | Exponent | Meaning |
|---|---|---|
| 3rd field | 7th field | Average of bytes per second transmitted from local to peer |
| 4th field | 8th field | Average of bytes per second transmitted from peer to local |
| 5th field | 9th field | Average of packets per second transmitted from local to peer |
| 6th field | 10th field | Average of packets per second transmitted from peer to local |

The eleventh field contains an arbitrary index number indicating an interface related to the primary interface (which has this value set to 0). The twelfth field is set to 0 and ignored upon reads. The thirteenth field indicates whether the eleventh field is valid. The fourteenth field indicates whether a link is configured as a hotspare link (for redundancy). The fifteenth field indicates whether this link is currently operational. The Length field comprises the length of the Local (48 bits), Peer (48 bits) Up Bytes Mantissa (16 bits), Down Bytes Mantissa (16 bits), Up Packets Mantissa (16 bits), Down Packets Mantissa (16 bits), Up Bytes Exponent (8 bits), Down Bytes Exponent (8 bits), Up Packets Exponent (8 bits), Down Packets Exponent (8 bits), Subinterface (12 bits), Subinterface Valid (1 bit), Standby (1 bit) and Up (1 bit) fields.

### Automatically configuring a mesh network

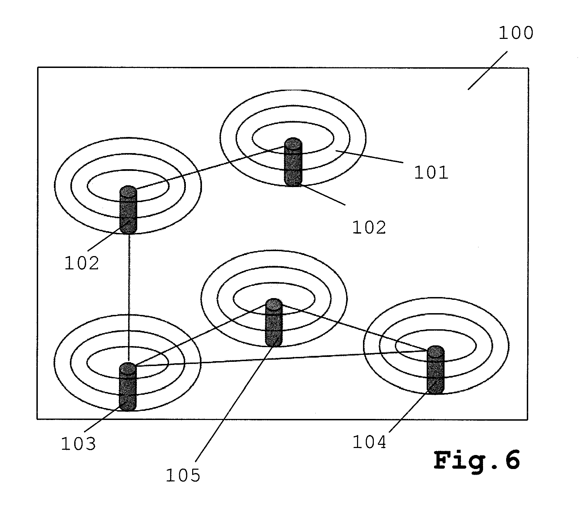

A mesh network 100 as shown in Fig.6 is a network in which several nodes 102-105 are interconnected. The first communication device 1000 in Fig.1 is one of the nodes 102-105, while the second communication device 2000 in Fig.1 is another one of the nodes 102-105. Each node 102-105 covers an area 101. There is a distinct advantage in redundancy. As long as every node 102-105 has at least one redundant link to another node, a single failing node should not affect traffic in the entire mesh network. Node 103 e.g. has two links to node 104. The first link is a direct link. There is a redundant link from node 103 to node 104 via node 105.

The invention enables automatically configuring a mesh network 100. In order to automatically configure the mesh network 100, the nodes 102-105 in the mesh need to know who its neighbours are and if these neighbours are meant to be part of the mesh network. The discovery of neighbours can e.g. be done through the reception of IEEE 802.11 beacons. When it is determined that the neighbouring node can be part of the mesh network, discovery protocol information elements 70 are used to send discovery information. When running a Linux operating system, it is possible to extract this information using ioctls ("input/output controls" that allows an application to control or communicate with a device driver). In the mesh network information is obtained containing the signal strength with which a device sees other devices. However, while this does indicate how well a node receives signals from its neighbours, nothing is said about how well the neighbour receives signals from the node. Thus, a small paradox is created as a connection needs to be configured in order to configure a connection. This means that devices 102-105 need to discover all mesh-capable neighbours.

In order to quickly retrieve information about (potential) neighbouring mesh nodes, all auto-mesh capable devices send out a 'mesh capabilities' information element. This mesh capabilities information element is, in case of an IEEE 802.11 network, a special IEEE 802.11 information element in a management frame transmitted by a IEEE 802.11 radio device in the mesh-capable device. It will be understood that in other type of networks, which can be fixed and/or wireless networks, another but similar management frame is used. The mesh capabilities information element contains the following fields: Element ID (8 bits), Length (8 bits), OUI (24 bits), Type (8 bits), Version (8 bits), discovery protocol (1 bit), HAM (1 bit), HEM (1 bit), Mesh count (8 bits), Mesh links (8 bits) and Mesh ID (16 bits). Element ID is an IEEE 802.11 Element ID, set to 221 decimal. Length is the size of the entire element in bytes. OUI is set to the vendor OUI, e.g. 0x0019AE. Type is the type of vendor specific IEEE 802.11 information element and is set to e.g. 0x01. Element ID, Length, OUI, Type and Version are IEEE 802.11 specific fields and can be different or absent in other types of networks. Version is the version of the frame, set to e.g. 0x01. Discovery protocol indicates whether the sending device understands the discovery protocol. HAM indicates whether the device is capable of automatically establishing mesh connectivity. HEM indicates whether the device is capable of encrypting the mesh link. Mesh count is the number of mesh connections the device is capable of establishing. Mesh links is the number of mesh connections the device has established. Mesh ID is a 16-bit integer value identifying the mesh network number the host is servicing. All nodes in a mesh network use identical mesh ID strings.

This capabilities information is used by neighbouring nodes 2000 to see the capabilities of a given device 1000. Any device not sending out this mesh capabilities information element can be considered not to be capable of auto-meshing. Any node broadcasting the same mesh ID, and supporting the discovery protocol can be connected to the mesh network. Whether the device supports the discovery protocol can be determined by evaluating the HAM field in the mesh capabilities information element or in the signal strength information element. In order to see whether a connection can be established to the neighbour, unicast transmissions are used to query the signal strength information. Alternatively node 1000 receives the signal strength information from neighbouring node 2000 via multicast or broadcast.

To discover signal strength information, a special discovery protocol information element called the 'signal strength' information element has been created. The signal strength information element is described under the section 'Discovery protocol frame format' above. Using signal strength information that is detected from a neighbouring node 2000, the node 1000 creates the signal strength information element. This makes it is possible to inform the neighbouring node 2000 about how the node 1000 perceives the neighbour 2000 and how the neighbour 2000 perceives the node 1000. Since the discovery protocol is capable of providing information of other wireless capable devices, it is even possible to obtain signal strength information from nodes the device is normally not capable of perceiving (thus information can be gained from devices from which no data can be received, but which might receive information from the device itself). Should a device not respond to the discovery protocol queries, it is possibly using a different encryption key. In any case, a device which does not respond can be considered as a device not supporting the discovery protocol or auto-meshing.

When the mesh connection has been established, retaining the connection becomes easier. As every node 102-105 implementing the discovery protocol will use layer 2 multicasting to periodically advertise its presence on the network 100, the existing mesh will ensure that every node 102-105 receives advertisements from all of the other nodes. In the established network, network discovery information elements as described above are transmitted between the nodes and from nodes to computers 4000 to maintain the mesh network.

One of the mesh nodes can be a bridge to a wired network. Preferably this is a device with a wired connection, if possible as close as possible to the Internet gateway. In Fig.1 the first communication device 1000 is an example of a device connected to a fixed network 3000. In Fig.1 the second communication device is an example of a mesh node without a wired connection.

A method for a first communication device to transmit network discovery information to a second communication device, a method for a second communication device to process network discovery information, a first communication device arranged for transmitting network discovery information to a second communication device, a second communication device arranged for processing network discovery information, and a layer 2 network discovery protocol are described in a separate patent application of the present applicant, titled "Network discovery protocol", which is filed on the same date as this patent application and is incorporated herein by reference.

## Claims

1. Method for configuring a mesh network (100) comprising at least two communication devices, the method comprising the steps of:
providing a layer 2 management frame comprising a mesh capabilities information element; and
transmitting the layer 2 management frame from a first communication device (1000) to a second communication device (2000),
wherein the mesh capabilities information element comprises one or more of the following information fields:
a discovery protocol identification indicating a capability of the first communication device (1000) of handling a discovery protocol;
a capability of the first communication device (1000) of automatically establishing a mesh connectivity;
an encryption indicator indicating whether the first communication device (1000) encrypts a layer 2 discovery protocol information element;
a mesh count indicating a maximum number of mesh connections that the first device (1000) is capable of establishing;
a number of mesh links indicating the number of mesh connections that the first device (1000) has established;
a mesh identification identifying a mesh network (100).

2. Method according to claim 1, the method further comprising the steps of:
providing a layer 2 frame comprising a sub-header (30), the sub-header (30) comprising an identifier field (31) indicating the presence of the discovery protocol in the layer 2 frame;
providing at least one discovery protocol information element (70) comprising network discovery information;
providing a discovery protocol header (50) and the at least one discovery protocol information element (70) to the layer 2 frame; and
transmitting the layer 2 frame from the first communication device (1000) to the second communication device (2000), the method further comprising the step of
detecting in the first communication device (1000) a signal strength information from the second communication device (2000),
wherein the at least one discovery protocol information element (70) comprises a signal strength information element, the signal strength information element comprising data indicating a signal strength of the second communication device (2000) and comprising one or more of the following information fields:
a channel frequency of the second communication device (2000) as detected in the first communication device (1000);
a layer 2 address of the second communication device (2000) as detected in the first communication device (1000);
a signal/noise ratio for the second communication device (2000) as detected in the first communication device (1000);
a connection status indicating whether the first communication device (1000) has established a logical link with the second communication device (2000);
a capability of automatically establishing a connection between the first communication device (1000) and the second communication device (2000);
a radio device identification identifying a radio device on the second communication device (2000) as detected in the first communication device (1000);
a service set identifier of the second communication device (2000) as detected in the first communication device (1000).

3. Method according to any of the preceding claims, the method further comprising the step of:
receiving in the first communication device (1000) a signal strength information from a third communication device, and wherein the at least one discovery protocol information element (70) comprises an associated stations information element, the associated stations information element comprising data indicating a third communication device associated with the first communication device (1000) and comprising one or more of the following information fields:
a signal/noise ratio for the third communication device as received with the signal strength information;
a radio device identification identifying a radio device on the first communication device (1000);
a virtual gateway number indicating a virtual access point on the radio device of the first communication device (1000);
an authentication mode of the third communication device.

4. Method according to any of the preceding claims, wherein the at least one discovery protocol information element (70) comprises a location information element, the location information element comprising data indicating a geographical location of the first communication device (1000).

5. Method according to any of the preceding claims, wherein the at least one discovery protocol information element (70) comprises a wireless information element, the wireless information element comprising data describing a radio device on the first communication device (1000) and comprising one or more of the following information fields:
a layer 2 address of the first communication device (1000);
a channel frequency of the first communication device (1000);
a transmit power of the first communication device (1000);
the radio identification identifying the radio device on the first communication device (1000);
an elevation indicating an inclination angle of an antenna's emission point of the first communication device (1000);
an azimuth of the first communication device (1000);
a maximum transmission rate of the radio device of the first communication device (1000);
an antenna identification identifying an antenna connected to the radio device of the first communication device (1000);
a radio noise floor of the first communication device (1000).

6. Method according to any of the preceding claims, wherein the at least one discovery protocol information element (70) comprises a bandwidth information element, the bandwidth information element comprising data indicating a bandwidth at the first communication device (1000) and comprising one or more of the following information fields:
an average bit rate for bytes transmitted from the first communication device (1000) to one or more other communication devices;
an average bit rate for bytes transmitted from one or more other communication devices to the first communication device (1000);
an average bit rate for packets transmitted from the first communication device (1000) to one or more other communication devices;
an average bit rate for packets transmitted from one or more other communication devices to the first communication device (1000).

7. Method according to any of the preceding claims, wherein the at least one discovery protocol information element (70) comprise a virtual gateway information element, the virtual gateway information element comprising data indicating at least one capability of a virtual communication device in the first communication device (1000) and comprising one or more of the following information fields:
a radio device identification identifying a radio device on the first communication device (1000);
a virtual gateway number indicating a virtual access point of the radio device;
an authentication mode;
a service set identifier of the first communication device (1000);
a service set identifier flag indicating whether the service set identifier contained within the first device information element is hidden;
an allow flag indicating whether other communication devices are allowed to associate with the first communication device (1000).

8. Method according to any of the preceding claims, the method further comprising the step of:
encrypting the at least one discovery protocol information element (70).

9. Method according to any of the preceding claims, the method further comprising the step of multicasting the layer 2 frame periodically.

10. Method according to any of the preceding claims, the method further comprising the step of relaying the layer 2 frame to another communication device when a connection between the first communication device (1000) and the second communication device fails (2000).

11. A first communication device (1000) that is arranged to transmit a layer 2 management frame and/or network discovery information to a second communication device (2000) using the steps of the method according to any of the claims 1-10.

12. A mesh network (100) that is configured using the steps of the method according to any of the claims 1-10.
